# EUROPÄISCHE PATENTANMELDUNG

(11) **EP 3 157 109 A1**
(43) Veröffentlichungstag der Anmeldung: **19.04.2017**
(21) Anmeldenummer: 16193643.0
(22) Anmeldetag: 13.10.2016
(51) Int. Cl.: H02G 3/04, H02G 3/08, H02G 3/06, H02G 3/14, B65D 39/00, H01R 13/52

(54) **VORRICHTUNG FÜR ELEKTROINSTALLATIONEN**

(30) Priorität: 13.10.2015 CH 14822015
(71) Anmelder: Morach, Christoph, 8335 Hittnau (CH)
(72) Erfinder: Morach, Christoph, 8335 Hittnau (CH)
(74) Vertreter: Frei Patent Attorneys

(57) **Zusammenfassung**

Die Vorrichtung für Elektroinstallationen zum Einbetonieren weist mindestens ein Elektroinstallationselement und mindestens ein Verschlusselement auf. Das Elektroinstallationselement weist mindestens einen Rohrstutzen zum Einführen eines Installationsrohres auf und der Rohrstutzen weist eine Einführungsöffnung auf, über welche ein Installationsrohr in den mindestens einen Rohrstutzen einführbar ist. Ein Rohrstutzeninnenraum des mindestens einen Rohrstutzens ist mit einem Doseninnenraum des Elektroinstallationselements zusammenhängend verbunden. Das heisst, dass ein Übergang vom Rohrstutzeninnenraum zum Doseninnenraum frei von einer ausschlagbaren Membran ist, wie sie aus dem Stand der Technik bekannt ist, und ein zusammenhängender Gesamtinnenraum gebildet wird. Das mindestens eine Verschlusselement ist separat vom Elektroinstallationselement ausgebildet und ist mindestens teilweise in den mindestens einen Rohrstutzen einsetzbar. Im eingesetzten Zustand dichtet das mindestens eine Verschlusselement den zusammenhängenden Innenraum im Bereich des Rohrstutzens nach aussen ab.

## Beschreibung

Die Erfindung bezieht sich auf das Gebiet der Installationstechnik, sie bezieht sich insbesondere auf eine Vorrichtung für Elektroinstallationen zum Einbetonieren.

Aus dem Stand der Technik sind Installationsdosen bekannt, die einbetoniert werden. Diese Vorrichtungen weisen Anschlusskanäle auf, wobei in den Anschlusskanal ein gerilltes Installationsrohr einführbar ist. Solche Anschlusskanäle weisen häufig einen Rohreinführungsstutzen zur Aufnahme eines Installationsrohres auf. Der Annschlusskanal ist zum Innenraum der Installationsdose hin mit einer Membran abgedichtet, so dass bei einem Einbetonieren der Vorrichtung kein Beton in den Innenraum der Installationsdose eindringen kann. Wird ein Installationsrohr am Anschlusskanal angeschlossen, so kann zunächst die abdichtende Membran entfernt bzw. herausgeschlagen werden und das fixierte Installationsrohr übernimmt die abdichtende Wirkung. Solche Installationsdosen sind beispielsweise aus US 6114630, EP 2849298 oder EP1737094 bekannt. In EP 1737094 werden beispielsweise Schlagkreuze oder Schlaghülsen für das Entfernen der Membran vorgeschlagen.

Beim Entfernen bzw. Herausschlagen der Membran kann die Vorrichtung jedoch beschädigt werden. Eine solche Beschädigung kann zum ungewünschten Eindringen von Beton oder im schlimmsten Fall zu einer Zerstörung der Vorrichtung führen. Im Regelfall weisen die Installationsdosen mehrer Anschlusskanäle auf, wobei meist nur in eine begrenzte Anzahl diese Anschlusskanäle je nach Gegebenheiten auf der Baustelle ein Installationsrohr befestigt wird. Aus diesem Grund wird nur aus den benötigten Anschlusskanälen die Membran ausgeschlagen. Aufgrund von Planungsänderungen kann es vorkommen, dass eine Verkabelung der Installationsdose verändert werden muss und eventuell ein anderer Anschlusskanal verwendet werden muss und/oder ein Anschlusskanal nicht mehr verwendet werden muss. Da das Herausschlagen der Membran zu einer irreversiblen Öffnung der Installationsdose führt, muss in einem solchen Fall die gesamte Installationsdose ausgewechselt werden, was zu höherem Arbeitsaufwand und höheren Kosten führt.

Es ist deshalb Aufgabe der Erfindung, eine Vorrichtung für Elektroinstallationen der eingangs genannten Art zu schaffen, welche die oben genannten Nachteile behebt.

Diese Aufgabe löst eine Vorrichtung mit einem Elektroinstallationselement und einem Verschlusselement.

Die Vorrichtung für Elektroinstallationen zum Einbetonieren weist mindestens ein Elektroinstallationselement und mindestens ein Verschlusselement auf. Das Elektroinstallationselement weist mindestens einen Rohrstutzen zum Einführen eines Installationsrohres auf und der Rohrstutzen weist eine Einführungsöffnung auf, über welche ein Installationsrohr in den mindestens einen Rohrstutzen einführbar ist. Ein Rohrstutzeninnenraum des mindestens einen Rohrstutzens ist mit einem Doseninnenraum des Elektroinstallationselements zusammenhängend verbunden. Das heisst, dass ein Übergang vom Rohrstutzeninnenraum zum Doseninnenraum frei von einer ausschlagbaren Membran ist, wie sie aus dem Stand der Technik bekannt ist, und ein zusammenhängender Gesamtinnenraum gebildet wird. Das mindestens eine Verschlusselement ist separat vom Elektroinstallationselement ausgebildet und ist mindestens teilweise in den mindestens einen Rohrstutzen einsetzbar. Im eingesetzten Zustand dichtet das mindestens eine Verschlusselement den zusammenhängenden Innenraum in einem Bereich des Rohrstutzens nach aussen ab. Auf diese Weise wird es möglich, dass die Vorrichtung auch ohne ausschlagbare Membran gegen das Eindringen von Beton oder Betonwasser beim Einbetonieren geschützt ist. Ausserdem kann durch das Vermeiden des Ausschlagens einer Membran verhindert werden, dass das Elektroinstallationselement beschädigt wird und damit unbrauchbar wird.

Das Elektroinstallationselement kann für verschiedene Elektroinstallationen dienen. Das Elektroinstallationselement kann beispielsweise als Elektroinstallationsdose, Abzweigdose, Lampendose, Verteildose oder Ähnliches aber auch als Träger für eine Installationsdose oder eine Montageplatte ausgebildet sein.

Ein Elektroinstallationsrohr, das in den Rohrstutzen eingeführt werden kann, kann an der Aussenseite gerillt oder glatt ausgestaltet sein. Das Elektroinstallationsrohr kann Kunststoff aufweisen. Das Elektroinstallationsrohr kann mechanischer Beanspruchung standhalten und dient zur Führung von Elektrokabeln. Das Elektroinstallationsrohr kann auch als Elektroleerrohr bezeichnet werden. Im Gegensatz zum Elektrokable, bei dem eine meist mehradrige Leitung mit einer Isolierung direkt ummantelt ist, ist bei einem Elektroinstallationsrohr ein Hohlraum im Rohrinneren ausgestaltet. In diesem Hohlraum kann beispielsweise ein Elektrokable eingeführt werden.

In einigen Ausführungsformen kann das Elektroinstallationselement mehrere Rohrstutzen mit je einem einsetzbaren Verschlusselement aufweisen, wobei der Doseninnenraum im Bereich des jeweiligen Rohrstutzens durch je ein Verschlusselement abgedichtet wird.

In weiteren Ausführungsformen dichtet das Verschlusselement im eingesetzten Zustand den Rohrstutzen ab, so dass auch in diesem Fall das Eindringen von Beton oder Betonwasser in den Doseninnenraum verhindert werden kann.

Das mindestens eine Verschlusselement kann aus dem mindestens einen Rohrstutzen entfernt werden, so dass der zusammenhängende Innenraum des Elektroinstallationselements nach aussen offen ist. Auf diese Weise können Elektrokabel oder andere Installationselement über ein im Rohrstutzen eingeführten Installationsrohr in den Doseninnenraum gezogen werden. Dabei übernimmt das Installationsrohr die Abdichtung des Elektroinstallationselements gegen das Eindringen von Beton und/oder Betonwasser nach aussen.

Das mindestens eine Verschlusselement kann mindestens ein Greifelement zum Greifen und Entfernen des mindestens einen Verschlusselements aus dem mindestens einen Rohrstutzen aufweisen. Dadurch kann das Verschlusselement aus dem Rohrstutzen einfach herausgezogen werden und das Entfernen des Verschlusselements erleichtert werden.

In anderen Ausführungsformen kann das Verschlusselement in den Doseninnenraum hineingedrückt und dann aus dem Doseninnenraum herausgenommen werden.

Das mindestens eine Verschlusselement kann wiederholt im mindestens einen Rohrstutzen eingesetzt und wieder entfernt werden. Beim wiederholten Einsetzen des Verschlusselements kann der Innenraum der Vorrichtung selbstverständlich wieder nach aussen abgedichtet werden. Auf diese Weise ist es möglich, dass wenn aufgrund von Planungsänderungen die Verkabelung des Elektroinstallationselements verändert werden muss oder aufgrund eines von fälschlicherweise entfernten Verschlusselements, kann das Verschlusselement erneut abdichtend in einen Rohrstutzen eingesetzt werden und in einem andern Rohrstutzen kann das entsprechend den geänderten oder vorgegebenen Bedingungen benötigte Verschlusselement aus dem Rohrstutzen entfernt werden. Daher muss das Elektroinstallationselement nach dem fälschlichen Entfernen des Verschlusselements nicht entsorgt werden, sondern kann weiter ohne Beschädigung der Dichtwirkung weiter verwendet werden. Dadurch kann nicht nur der Arbeitsaufwand sondern auch die Kosten verringert werden.

Das mindestens eine Verschlusselement kann mindestes ein erstes Kupplungselement aufweisen und das Elektroinstallationselement kann mindestens ein zweites Kupplungselement aufweisen. Das mindestens eine erste Kupplungselement und das mindestens eine zweite Kupplungselement sind miteinander koppelbar. Durch die Kopplung der beiden Kupplungselemente kann das eingesetzte Verschlusselement besonders sicher im Rohrstutzen gehalten und fixiert werden. Dabei kann insbesondere der Rohrstutzen das zweite Kupplungselement aufweisen. Die beiden miteinander koppelbaren Kupplungselemente sind dabei zueinander korrespondierend ausgebildet, so dass beim Koppeln des ersten Kupplungselements und des zweiten Kupplungselements eine formschlüssige und/oder kraftschlüssige Verbindung entsteht. Mit Hilfe der formschlüssigen und/oder kraftschlüssigen Verbindung kann das eingesetzte Verschlusselement an dem Elektroinstallationselement befestigt werden.

Die formschlüssige Verbindung kann beispielsweise eine einrastende bzw. ineinander eingreifende oder klemmende Verbindung sein. Die Kupplungselemente können dabei als Nut und Steg oder Schwalbenschwanzverbindung oder als einer anderen denkbaren Kombination ausgestaltet sein und allgemein eine Schiebe- oder Steck- oder Dreh-Verbindung herstellen.

Das erste Kupplungselement kann als Vorsprung und das zweite Kupplungselement als Ausnehmung oder Abstufung ausgebildet sein. Auf diese Weise kann der Vorsprung des Verschlusselements in die Ausnehmung oder Abstufung des Elektroinstallationselements, insbesondere des Rohrstutzens, eingreifen oder einrasten. Dabei besteht die Möglichkeit, dass das erste Kupplungselement nach aussen gerichtet ist und somit vom Rohrstutzeninnenraum her in die Ausnehmung oder Abstufung des zweiten Kupplungselements eingreift bzw. einrastet. Alternativ dazu kann das erste Kupplungselement von ausserhalb des Rohrstutzens in die Ausnehmung oder die Abstufung des zweiten Kupplungselements eingreifen bzw. einrasten.

In einer anderen Ausführungsform kann das mindestens eine erste Kupplungselement als Vorsprung ausgebildet sein und das mindestens eine zweite Kupplungselement ebenfalls als Vorsprung ausgebildet sein. Auch hier bestehen beide oben beschriebenen Möglichkeiten zur Anordnung des ersten Kupplungselements. Dabei ist insbesondere die Ausführungsform bevorzugt, bei welcher der Vorsprung des zweiten Kupplungselements zum den Rohrstutzeninnenraum hin ausgerichtet ist. Auf diese Weise kann das zweite Kupplungselement nach dem Entfernen des Verschlusselements auch zum Halten eines eingeführten Installationsrohres dienen.

Das mindestens eine Verschlusselement kann zapfenförmig oder zylinderförmig ausgestaltet sein und das mindestens eine erste Kupplungselement als umlaufender Vorsprung ausgebildet sein. Auf diese Weise ist die Orientierung des Verschlusselements in Bezug auf eine Rotation um eine Rohrstutzenachse für das Eingreifen des ersten Kupplungselements in das zweite Kupplungselement nicht ausschlaggebend und das Koppeln der beiden Kupplungselemente kann unabhängig von der Rotationsorientierung des Verschlusselements gewährleistet werden.

Das mindestens eine zweite Kupplungselement kann separat vom Elektroinstallationselement ausgebildet sein und im mindestens einen Rohrstutzen einsetzbar und/oder fixierbar sein. Das heisst, das Elektroinstallationselement und das zweite Kupplungselement sind einzeln und unabhängig voneinander herstellbar. Des Weiteren kann das zweite Kupplungselement in den Rohrstutzen einschiebbar sein.

Das zweite Kupplungselement kann in einem Zwei- beziehungsweise Mehrkomponentenspritzgussverfahren hergestellt sein. Dadurch wird es möglich, zum einen die Elemente des zweiten Kupplungselements, die besonders stark beansprucht werden (bspw. Vorsprung) aus einem strapazierfähigen und stabilen Material auszugestalten. Zum anderen können weniger stark beanspruchte Elemente des zweiten Kupplungselements aus einem günstigen formstabilen Material ausgestaltet sein.

Das Elektroinstallationselement kann Polyethylen hoher Dichte (PE-HD) aufweisen. Im Gegenzug kann das separate zweite Kupplungselement Polycarbonat (PC) und/oder PC-Blend aufweisen. Das zweite Kupplungselement kann alternativ auch Polyamid (PA) aufweisen.

Das zweite Kupplungselement kann mindestens teilweise aus einem Material mit hoher Festigkeit gefertigt sein. Das zweite Kupplungselement kann aus Metall, insbesondere aus Stahl oder Federstahl gefertigt sein. Insbesondere die stark beanspruchen Elemente des zweiten Kupplungselements können so eine hohe Festigkeit aufweisen.

Alternativ zu einem separaten zweiten Kupplungselement kann das zweite Kupplungselement auch einstückig mit dem Elektroinstallationselement bzw. mit dem Rohrstutzen ausgestaltet sein.

Der Rohrstutzen kann einstückig mit dem Elektroinstallationselement ausgebildet sein.

Das mindestens eine Verschlusselement kann in Richtung der Rohrstutzenachse einsetzbar sein. Die Rohrstutzenachse erstreckt sich von der Einführungsöffnung zum Doseninnenraum hin. Bei einer zylindrischen Form des Rohrstutzens entspricht die Rohrstutzenachse dabei der Zylinderachse des Rohrstutzens. Dadurch wird es möglich das Verschlusselement entlang der Rohrstutzenachse, sozusagen geführt, einzusetzen, wodurch ein Verkanten oder Verdrehen des Verschlusselements im Rohrstutzen vermieden werden kann. Auf diese Weise kann das abdichtende Einsetzten des Verschlusselement sichergestellt werden.

Das mindestens eine Verschlusselement kann an einem ersten, distalen Endbereich, welches im eingesetzten Zustand dem Doseninnenraum zugewandt ist, mindestens ein Dichtungselement aufweisen. Das mindestens eine Dichtungselement kann den Doseninnenraum insbesondere im Bereich des mindestens einen Rohrstutzens im eingesetzten Zustand nach aussen abdichten.

Das Dichtungselement kann als umlaufende Dichtungslippe ausgebildet sein. Dabei wird das Dichtungselement beim Einsetzen in den Rohrstutzen vorteilhafterweise nicht deformiert, wodurch die Abdichtung nach aussen ermöglicht bzw. verbessert werden kann.

Der Rohrstutzen kann einen ersten Abschnitt und einen zweiten Abschnitt aufweisen. Dabei weist der erste Abschnitt einen grösseren Innenumfang bzw. Innendurchmesser auf als der zweite Abschnitt. Der erste Abschnitt ist näher an der Einführungsöffnung des Rohrstutzens angeordnet als der zweite Abschnitt. Das heisst, dass der zweite Abschnitt im dem Doseninnenraum zugewandten Bereich des Rohrstutzens angeordnet ist und dass im eingesetzten Zustand des Verschlusselements der zweite Abschnitt im Bereich des ersten, distalen Endbereichs des Verschlusselements angeordnet ist.

Das Elektroinstallationselement kann eine Vielzahl von Rohrstutzen aufweisen, wobei die verschiedenen Rohrstutzen verschiedene Innendurchmesser aufweisen können um Installationsrohre mit unterschiedlichen Aussendurchmessern einführen zu können. In Ausführungsformen der Erfindung ist es möglich, dass jeweils ein Rohrstutzen entlang der Rohrstutzenachse einen konstanten Innendurchmesser aufweist und somit verschiedene Rohrstutzen je konstante und von einem anderen Rohrstutzen verschiedene Innendurchmesser aufweisen. Es ist auch möglich, dass ein Rohrstutzen entlang der Rohrstutzenachse verschiedene Innendurchmesser aufweist. Beispielsweise kann, wie oben beschrieben, ein Rohrstutzen im ersten Abschnitt einen grösseren Innendurchmesser aufweisen als in einen zweiten Abschnitt. Der erste Abschnitt (grösserer Innendurchmesser) des Rohrstutzens ist in diesem Fall näher zu der Einführungsöffnung des Rohrstutzens hin angeordnet als der zweite Abschnitt (kleinerer Innendurchmesser).

Der Übergang vom ersten zum zweiten Abschnitt des Rohrstutzens kann zumindest abschnittsweise fliessend respektive stetig oder kontinuierlich sein, wodurch die Ausbildung von Anstosskanten verhindert werden kann. Auf diese Weise wird es möglich, dass Kabel die durch das Installationsrohr geführt werden, ohne hängen zu bleiben (barrierefrei) im Elektroinstallationselement eingeführt werden können. Der im Wesentlichen fliessende Übergang kann beispielsweise durch eine abgeschrägte Kanalverengung realisiert werden.

In weiteren Ausführungsformen kann ein Innenumfang des mindestens einen Rohrstutzens im Bereich der Einführungsöffnung im Wesentlichen dem Aussenumfang des mindestens einen Verschlusselements in einem zweiten, proximalen Endbereich entsprechen. Der zweite Endbereich ist im eingesetzten Zustand dem Doseninnenraum abgewandt. Auf diese Weise kann ein Einführen eines Installationsrohres verhindert werden, wenn das Verschlusselement noch im Rohrstutzen eingesetzt ist.

Das mindestens eine Verschlusselement respektive ein Abschluss verläuft im eingesetzten Zustand im Wesentlichen bündig zu der Einführungsöffnung. Dadurch kann verhindert werden, dass das Verschlusselement einfach abgestreift werden kann, da es nicht aus dem Rohrstutzen hervorsteht.

Der mindestens eine Rohrstutzen kann einstückig mit dem Elektroinstallationselement ausgebildet sein. Auf diese Weise kann sichergestellt werden, dass ein Eindringen von Beton oder Betonwasser beim Übergang vom Rohrstutzen zum Elektroinstallationselement verhindert werden kann.

In weiteren Ausführungsformen weist das Verschlusselement einen Anschlag im zweiten Endbereich auf, wobei der Anschlag am Rohrstutzen angreifen bzw. anschlagen kann. Auf diese Weise kann ein versehentliches Eindrücken das Verschlusselement in den Doseninnenraum verhindert werden.

Weitere bevorzugte Ausführungsformen gehen aus den abhängigen Patentansprüchen hervor.

Im Folgenden wird der Erfindungsgegenstand anhand von bevorzugten Ausführungsbeispielen, welche in den beiliegenden Zeichnungen dargestellt sind, näher erläutert. Es zeigen jeweils schematisch:
- Figur 1a: eine Explosionszeichnung eines Rohrstutzens mit separatem zweite Kupplungselement und einem Verschlusselement;
- Figur 1b: eine Schnittzeichnung durch einen Rohrstutzen mit eingesetztem und fixiertem zweiten Kupplungselement und eingesetztem Verschlusselement;
- Figur 2a: eine Ansicht eines Rohrstutzens mit eingesetztem zweiten Kupplungselement und separatem Verschlusselement;
- Figur 2b: eine alternative, rotierte Ansicht von Figur 2a;
- Figur 2c: eine Schnittzeichnung durch einen Rohrstutzen mit eingesetztem und fixiertem zweiten Kupplungselement und eingesetztem Verschlusselement;
- Figur 3: eine Ansicht eines Rohrstutzens mit eingesetztem und fixiertem zweiten Kupplungselement und separatem Verschlusselement;
- Figur 4: eine Ansicht eines Rohrstutzens mit eingesetztem und fixiertem zweiten Kupplungselement und alternativem, separatem Verschlusselement;
- Figur 5: eine Ansicht eines Elektroinstallationselements mit Rohrstutzen und Verschlusselement im eingesetzten Zustand; und
- Figur 6: eine Ansicht eines Elektroinstallationselements mit mehreren Rohrstutzen und mehreren Verschlusselementen.

Grundsätzlich sind in den Figuren gleiche oder analoge Teile mit gleichen Bezugszeichen versehen.

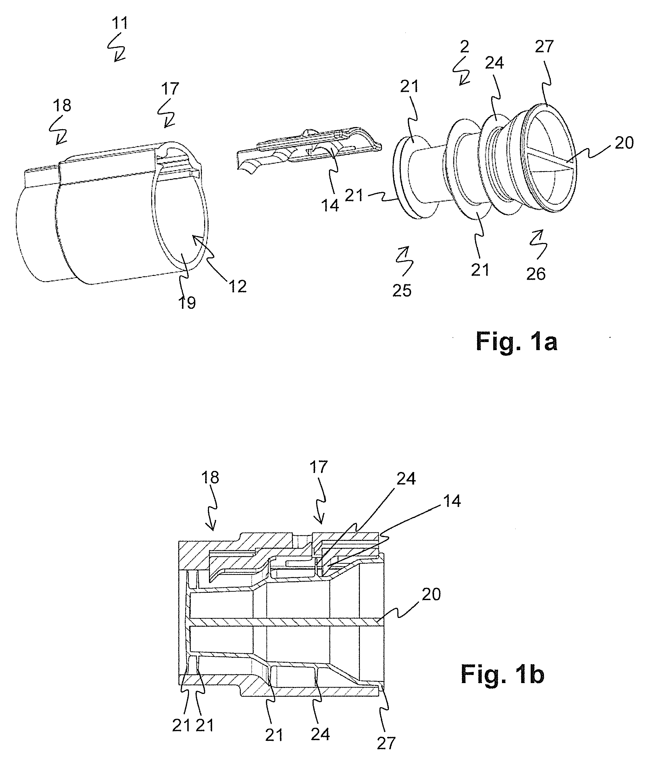

Die Figuren 1a und 1b zeigen ein Verschlusselement 2 und einen Rohrstutzen 11, der an einem Elektroinstallationselement 1 (nicht gezeigt) angeordnet ist, mit einem separaten im Rohrstutzen 11 einsetzbaren und fixierbaren zweiten Kupplungselement 14. Der Rohrstutzen 11 weist eine Einführungsöffnung 19 auf, über welche ein Installationsrohr (nicht gezeigt) in den mindestens einen Rohrstutzen einführbar ist. Ein Rohrstutzeninnenraum 12 des mindestens einen Rohrstutzens 11 ist mit einem Doseninnenraum 10 des Elektroinstallationselements zusammenhängend verbunden. Das heisst, dass ein Übergang vom Rohrstutzeninnenraum 12 zum Doseninnenraum 10 frei von einer ausschlagbaren Membran ist. Das separate, in den Rohrstutzen 11 einsetzbare zweite Kupplungselement 14 ist plättchenförmig ausgestaltet und weist eine Raste auf, die im eingesetzten Zustand zum Rohrstutzeninnenraum 12 hin ausgerichtet ist.

Der Rohrstutzen 11 weist einen ersten Abschnitt 17 und einen zweiten Abschnitt 18 auf. Dabei weist der erste Abschnitt 17 einen grösseren Innendurchmesser auf als der zweite Abschnitt 18. Der erste Abschnitt 17 ist näher an der Einführungsöffnung 19 des Rohrstutzens 11 angeordnet als der zweite Abschnitt 18. Damit ist der zweite Abschnitt 18 im dem Doseninnenraum 10 zugewandten Bereich des Rohrstutzens 11 angeordnet.

Das Verschlusselement 2 ist zapfenförmig ausgebildet und kann in den Rohrstutzen 11 eingesetzt werden (siehe Fig. 1b - eingesetzter Zustand). Das Verschlusselement 2 weist zwei Dichtungselemente 21 in Form von Dichtungslippen an einem ersten, distalen Endbereich 25 auf. Der erste Endbereich 25 ist im eingesetzten Zustand dem Doseninnenraum 10 zugewandt. Die beiden Dichtungselemente 21 dichten den Doseninnenraum 10 insbesondere im Bereich des Rohrstutzens 11 im eingesetzten Zustand nach aussen ab. Dabei können die Dichtungselemente 21 elastisch verformt sein und eine kraftschlüssige zwischen dem Rohrstutzens 11 und dem Verschlusselement 2 bilden. Im eingesetzten Zustand des Verschlusselements ist somit der zweite Abschnitt 18 im Bereich des ersten, distalen Endbereichs 25 des Verschlusselements angeordnet.

Das Verschlusselement 2 weist ein erstes Kupplungselement 24 auf, welches als umlaufender Vorsprung ausgestaltet ist. Das erste Kupplungselement 24 koppelt im eingesetzten Zustand mit dem zweiten Kupplungselement 14, wodurch das Verschlusselement 2 im Rohrstutzen 11 sicher gehalten wird. Mit anderen Worten: Das erste Kupplungselement 24 rastet im eingesetzten Zustand in das zweite Kupplungselement 14 ein.

Das Verschlusselement 2 weist einen Anschlag 27 in einem zweiten Endbereich 26 auf, wobei der Anschlag 27 im eingesetzten Zustand am Rohrstutzen angreift bzw. anschlägt. Auf diese Weise kann ein versehentliches Eindrücken das Verschlusselement 2 in den Doseninnenraum 10 verhindert werden. Der zweite Endbereich 26 ist im eingesetzten Zustand vom Doseninnenraum 10 abgewandt und somit im Bereich der Einführungsöffnung 19 angeordnet.

Das Verschlusselement 2 weist zwischen dem ersten Endbereich 25 und dem zweiten Endbereich 26 ein weiteres Dichtungselement 21 in Form einer umlaufenden Dichtungslippe auf. Die weitere Dichtungslippe 21 ist im einsetzten Zustand im Bereich des Übergangs vom ersten Abschnitt 17 zum zweiten Abschnitt 18 des Rohrstutzen 11 angeordnet. Auf diese Weise kann eine zusätzliche Dichtwirkung erzielt werden.

Das Verschlusselement 2 weist ein Greifelement 20 zum Greifen und Entfernen des Verschlusselements 2 aus dem Rohrstutzen 11 auf. Das Greifelement 20 ist dabei stegförmig ausgebildet und ist am zweiten Endbereich 26 des Verschlusselements 2 angeordnet.

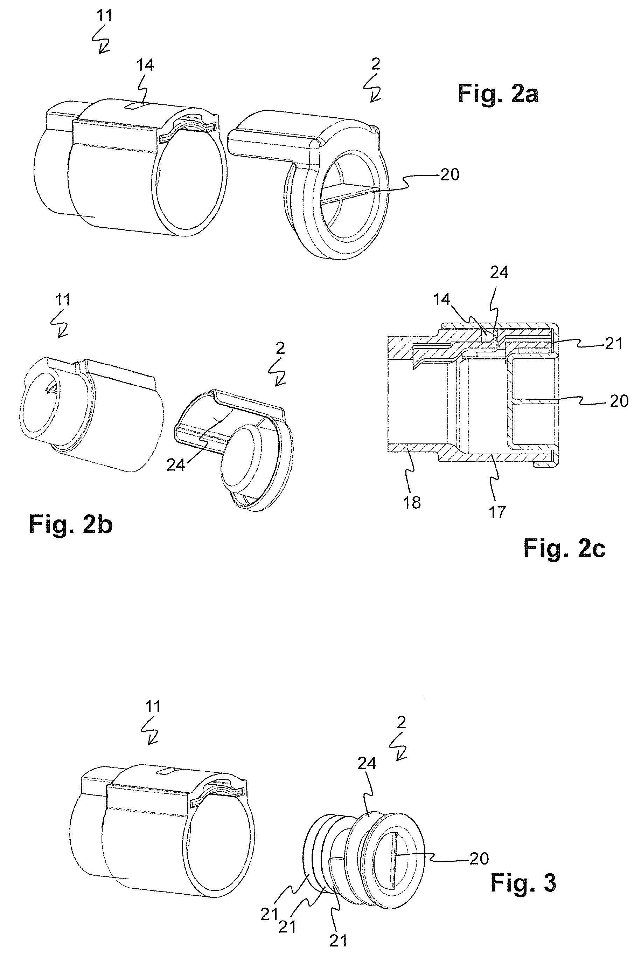

Figur 3 zeigt eine alternative Ausführungsform des Verschlusselements 2, wobei das erste Kupplungselement 24 gewindeförmig ausgestaltet ist und somit beim Einsetzen am zweiten Kupplungselement 14 angeschraubt werden kann. Der erste Endbereich 25 weist drei Dichtungselemente 21 auf.

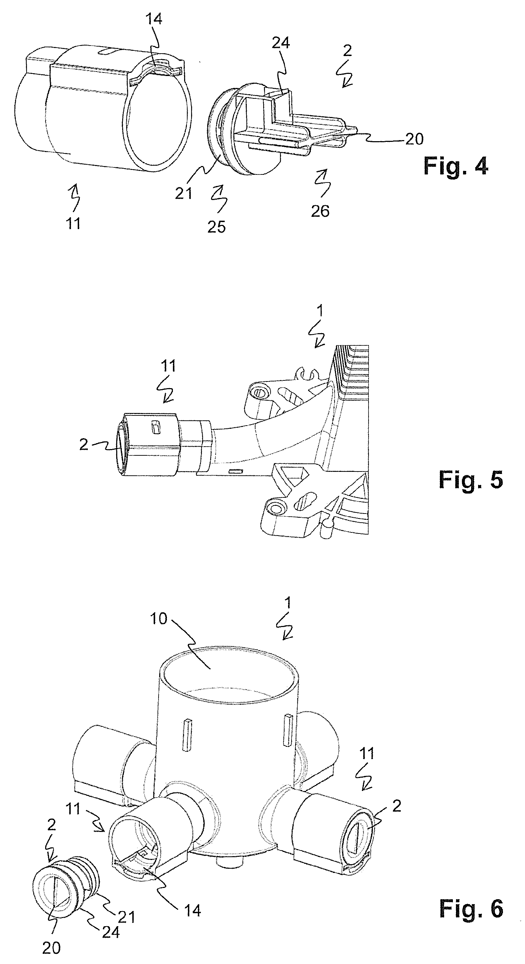

Figur 4 zeigt einen Rohrstutzen 11 mit eingesetztem und fixiertem zweiten Kupplungselement 14 und alternativem, separatem Verschlusselement 2. Das erste Kupplungselement 24 ist als absatzförmiger Vorsprung ausgestaltet. Der zweite Endbereich 26 wird durch das stegförmige Greifelement 20 gebildet und am ersten Endbereich 25 ist ein Dichtungselement 21 abgeformt. Die in Figur 4 gezeigte Ausführungsform bildet einen Bajonett-Verschluss zwischen Verschlusselement 2 und dem zweiten Kupplungselement 14, wobei beim Einsetzen das erste Kupplungselement 24 in das zweite Kupplungselement 14 einschnappt und beim Entfernen das Verschlusselement 2 durch eine Drehbewegung belöst werden kann.

Im Gegensatz zu den in den Figuren 1, 3 und 4 gezeigten Ausführungsformen, bei denen das zweite Kupplungselement 14 als separates Element in Form einer Raste (Vorsprung) ausgebildet ist, wird das zweite Kupplungselement 14 in einer anderen Ausführungsformen wie in Figur 2a, 2b und 2c gezeigt, durch eine Ausnehmung am Rohrstutzen 11 gebildet. In diese Ausnehmung 14 kann das erste Kupplungselement 24 des Verschlusselements 2 eingreifend koppeln respektive einschnappen. Das Verschlusselement 2 ist teilweise als Mantel ausgestaltet, so dass der Mantel des Verschlusselements 11 im eingesetzten Zustand mindestens den Bereich der Ausnehmung abdeckt bzw. ummantelt. Das erste Kupplungselement 24 ist dabei als Vorsprung ausgestaltet und ist im eingesetzten Zustand zum Rohrstutzeninnenraum 12 hin ausgerichtet, wobei es am zweiten Kupplungselement 14 einrastbar ist.

Alternativ zu der in Figur 2 gezeigten Ausführungsform kann das erste Kupplungselement 24 an einem Absatz des Rohrstutzens 11 ankoppeln, wobei der entsprechende Absatz dann als zweites Kupplungselement 14 ausgebildet ist.

Figur 5 zeigt eine Teilansicht eines Trägers 1 für eine Elektroinstallationsdose oder eine Montageplatte mit Rohrstutzen 11 und einem eingesetzten Verschlusselement 2.

In Figur 6 ist eine Elektroinstallationsdose 1 mit vier Rohrstutzen 11 gezeigt. Dabei ist in einigen Rohrstutzen 11 ein Verschlusselement 2 eingesetzt und mindestens aus einem Rohrstutzen 11 ist das Verschlusselement 2 entfernt.

## Patentansprüche

1. Eine Vorrichtung für Elektroinstallationen aufweisend mindestens ein Elektroinstallationselement (1)
und mindestens ein Verschlusselement (2),
wobei das Elektroinstallationselement (1) mindestens einen Rohrstutzen (11) zum Einführen eines Installationsrohres aufweist und der Rohrstutzen eine Einführungsöffnung (19) aufweist, über welche ein Installationsrohr in den mindestens einen Rohrstutzen einführbar ist,
**dadurch gekennzeichnet, dass** ein Rohrstutzeninnenraum (12) des mindestens einen Rohrstutzens (11) mit einem Doseninnenraum (10) des Elektroinstallationselements (1) zusammenhängend verbunden ist und das mindestens eine Verschlusselement (2) separat vom Elektroinstallationselement (1) ausgebildet ist,
wobei das mindestens eine Verschlusselement (2) mindestens teilweise im mindestens einen Rohrstutzen (11) einsetzbar ist und den zusammenhängenden Innenraum der Vorrichtung im eingesetzten Zustand nach aussen abdichtet.

2. Vorrichtung gemäss Anspruch 1, wobei das mindestens eine Verschlusselement (2) aus dem mindestens einen Rohrstutzen (11) entfernbar ist.

3. Vorrichtung gemäss Anspruch 2, wobei das mindestens eine Verschlusselement (2) mindestens ein Greifelement (20) zum Greifen und Entfernen des mindestens einen Verschlusselements aus dem mindestens einen Rohrstutzen (11) aufweist.

4. Vorrichtung gemäss einem der vorherigen Ansprüche, wobei das mindestens eine Verschlusselement (2) wiederholt im mindestens einen Rohrstutzen (11) einsetzbar und wieder entfernbar ist.

5. Vorrichtung gemäss einem der vorherigen Ansprüche, wobei das mindestens eine Verschlusselement (2) mindensts ein erstes Kupplungselement (24) aufweist und das Elektroinstallationselement (1) mindestens ein zweites Kupplungselement (14) aufweist,
wobei das mindestens eine erste Kupplungselement (24) und das mindestens eine zweite Kupplungselement (14) miteinander koppelbar sind.

6. Vorrichtung gemäss Anspruch 5, wobei das mindestens eine erste Kupplungselement (24) als Vorsprung ausgebildet ist und das mindestens eine zweite Kupplungselement (14) als Ausnehmung oder Abstufung ausgebildet ist.

7. Vorrichtung gemäss Anspruch 5, wobei das mindestens eine erste Kupplungselement (24) als Vorsprung ausgebildet ist und das mindestens eine zweite Kupplungselement (14) als Vorsprung ausgebildet ist.

8. Vorrichtung gemäss einem der Ansprüche 5-7, wobei das mindestens eine Verschlusselement (2) zapfenförmig ausgestaltet ist und das mindestens eine erste Kupplungselement (24) als umlaufender Vorsprung ausgebildet ist.

9. Vorrichtung gemäss einem der Ansprüche 5-8, wobei das mindestens eine zweite Kupplungselement (14) separat vom Elektroinstallationselement (1) ausgebildet ist und im mindestens einen Rohrstutzen (11) einsetzbar und fixierbar ist.

10. Vorrichtung gemäss einem der vorherigen Ansprüche, wobei das mindestens eine Verschlusselement (2) in Richtung einer Rohrstutzenachse (13) einsetzbar ist, wobei sich die Rohrstutzenachse von der Einführungsöffnung (19) zum Doseninnenraum (10) hin erstreckt.

11. Vorrichtung gemäss einem der vorherigen Ansprüche, wobei das mindestens eine Verschlusselement (2) an einem ersten, distalen Endbereich, welches im eingesetzten Zustand dem Doseninnenraum (10) zugewandt ist, mindestens ein Dichtungselement (21) aufweist, wobei das mindestens eine Dichtungselement (21) den Doseninnenraum (10) im Bereich des mindestens einen Rohrstutzens (11) im eingesetzten Zustand nach aussen abdichtet.

12. Vorrichtung gemäss einem der vorherigen Ansprüche, wobei der mindestens eine Rohrstutzen (11) einen ersten Abschnitt (17) und einen zweiten Abschnitt (18) aufweist, wobei der erste Abschnitt (17) einen grösseren (Innendurchmesser)Innenumfang aufweist als der zweite Abschnitt (18) und der erste Abschnitt (17) näher an der Einführungsöffnung (19) des Rohrstutzens (11) angeordnet ist als der zweite Abschnitt (18).

13. Vorrichtung gemäss einem der vorherigen Ansprüche, wobei ein Innenumfang des mindestens einen Rohrstutzens (11) im Bereich der Einführungsöffnung (19) im Wesentlichen dem Aussenumfang des mindestens einen Verschlusselements (2) in einem zweiten, proximalen Endbereich (26) entspricht, wobei der zweite Endbereich im eingesetzten Zustand dem Doseninnenraum (10) abgewandt ist

14. Vorrichtung gemäss einem der vorherigen Ansprüche, wobei das mindestens eine Verschlusselement (2) im eingesetzen Zustand im Wesentlichen bündigen mit der Einführungsöffnung (19) verläuft.

15. Vorrichtung gemäss einem der vorherigen Ansprüche, wobei der mindestens eine Rohrstutzen (11) einstückig mit dem Elektroinstallationselement (1) ausgebildet ist.
